# EUROPEAN PATENT APPLICATION

(11) **EP 4 837 857 A1**
(43) Date of publication of application: **11.11.2026**
(21) Application number: 24921708.4
(22) Date of filing: 05.12.2024
(51) Int. Cl.: B65D 90/02, B65D 90/00, H02J 15/00

(54) **ENERGY STORAGE CONTAINER**

(30) Priority: 31.01.2024 CN 202420241876 U
(71) Applicant: Contemporary Amperex Technology Co., Limited, Ningde, Fujian 352100 (CN)
(72) Inventor: SU, Haibin, Ningde, Fujian 352100 (CN); LI, Bulou, Ningde, Fujian 352100 (CN)
(74) Representative: Lorenz Seidler Gossel Part. mbB
(86) International application number: PCT/CN2024/137212
(87) International publication number: WO 2025/161686

(57) **Abstract**

Embodiments of the present application provide an energy storage container. The energy storage container comprises a container body and anti-collision members. The anti-collision members are arranged on the container body. Each anti-collision member comprises a guide portion. The anti-collision members are arranged on the container body, improving the anti-collision performance of the container body, and reducing the risk of damage to the energy storage container due to collisions during movement. The anti-collision members are each provided with a guide portion, and by providing the guide portions, the guide portions can guide the energy storage container to move, reducing the transfer difficulty of the energy storage container.

## Description

### CROSS-REFERENCE TO RELATED APPLICATIONS

The present application claims priority to Chinese Patent Application No. 202420241876.4 filed on January 31, 2024 and entitled "ENERGY STORAGE CONTAINER", which is incorporated herein by reference in its entirety.

### TECHNICAL FIELD

The present application relates to the technical field of energy storage, and in particular, to an energy storage container.

### BACKGROUND

An energy storage container is an energy storage device for storing and transferring electric energy storage. The energy storage container has the characteristics of convenient installation and transportation, a high degree of integration, a small footprint, and good scalability, and is an important component in the development of distributed energy resources, smart grids, and the Energy Internet in energy storage systems.

During transfer of an energy storage container, components on the energy storage container a are liable to interfere with external components, thereby affecting normal movement of the energy storage container and increasing the difficulty of transferring the energy storage container.

### SUMMARY

Embodiments of the present application provide an energy storage container, which can effectively reduce the difficulty of transferring the energy storage container.

Embodiments of the present application provide an energy storage container. The energy storage container includes a container body, a battery, and an anti-collision member. The container body has an accommodating cavity, the battery is accommodated within the accommodating cavity, and the anti-collision member is disposed on the container body. The anti-collision member includes a guide portion.

In the above technical solution, by disposing the anti-collision member on the container body, the anti-collision performance of the container body is improved, and the risk of damage to the energy storage container due to impact during movement is reduced. The anti-collision member is provided with a guide portion. By providing the guide portion, the guide portion can guide movement of the energy storage container, thereby reducing the difficulty of transferring the energy storage container.

In some embodiments, the guide portion is configured to, when the energy storage container is moved such that the guide portion contacts an external component, guide the energy storage container away from the external component. During the process in which the container body is moved such that the anti-collision member of the energy storage container approaches the external component, the guide portion of the anti-collision member can contact the external component, buffering the contact between the container body and the external component. As the container body continues to move, the guide portion can guide the container body away from the external component, thereby reducing the difficulty of transferring the energy storage container.

In some embodiments, the anti-collision member is disposed on at least one side of the container body along a first direction, and the guide portion is configured to, when the energy storage container is moved along a second direction such that the guide portion contacts the external component, guide the energy storage container away from the external component along the first direction, where the first direction intersects the second direction. By disposing the anti-collision member on at least one side of the container body along the first direction, the anti-collision member may contact an external component arranged along the first direction, thereby reducing the risk of damage to the container body caused by direct contact with the external component. When the energy storage container is moved along the second direction, the guide portion of the anti-collision member may contact the external component, and the guide portion can guide the container body away from the external component along the first direction, thereby facilitating the energy storage container to continue to move along the second direction, reducing the risk that the external component hinders the anti-collision member and prevents the energy storage container from continuing to move along the second direction, and reducing the difficulty of transferring the energy storage container.

In some embodiments, the anti-collision member is disposed on at least one side of the container body along a first direction. The guide portion includes an inclined surface intersecting the first direction. By providing the inclined surface intersecting the first direction, when the external component contacts the inclined surface, as the container body is moved relative to the external component, the inclined surface can guide the container body away from the external component along the first direction. The inclined surface is easy to process and has low processing cost.

In some embodiments, the anti-collision member has a first end surface. The first end surface is located at an end of the anti-collision member away from the container body along the first direction, and the inclined surface is connected to the first end surface. By arranging the inclined surface close to the first end surface facing away from the container body, when the inclined surface contacts the external component, the inclined surface guides the external component to move toward the first end surface, and the external component may be directly separated from the anti-collision member at the first end surface. Accordingly, after contacting the inclined surface, the external component is separated from the anti-collision member, resulting in a simpler structure and improved material utilization.

In some embodiments, the inclined surface is connected to each of two sides of the first end surface along a second direction, and the second direction intersects the first direction. By providing inclined surfaces on two sides of the anti-collision member along the second direction, a corresponding inclined surface may contact the external component when the energy storage container is moved back and forth in the second direction, thereby guiding the container body away from the external component, and alleviating the problem that the installation position of the anti-collision member on the container body is limited because the anti-collision member has only one inclined surface.

In some embodiments, the anti-collision member includes a first wall portion, a second wall portion, a third wall portion, a fourth wall portion, and a fifth wall portion that are connected in sequence. The first wall portion and the fifth wall portion are oppositely disposed along the second direction. The third wall portion is farther away from the container body than the first wall portion and the fifth wall portion along the first direction. A surface of the third wall portion facing away from the container body is the first end surface. A surface of the second wall portion facing away from the fourth wall portion and a surface of the fourth wall portion facing away from the second wall portion are both inclined surfaces. By disposing the first wall portion and the fifth wall portion opposite each other and providing the third wall portion farther away from the container body than the first wall portion and the fifth wall portion, it is beneficial to maintain a sufficient distance on the side of the second wall portion and the fourth wall portion away from the third wall portion, such that a larger first end surface can be provided, thereby reducing the risk of damaging the external component due to an excessively small first end surface. In addition, inclined surfaces intersecting the first direction can be provided on the second wall portion and the fourth wall portion. When the size of the first end surface is determined, the inclination angle between the inclined surface and the first direction can be adjusted by adjusting the distance between the first wall portion and the fifth wall portion, so as to facilitate the guide portion to guide movement of the container body.

In some embodiments, the container body is provided with a mounting seat, and the first wall portion, the second wall portion, the third wall portion, the fourth wall portion, and the fifth wall portion are all connected to the mounting seat. By disposing the anti-collision member on the container body through the mounting seat, and by connecting the first wall portion, the second wall portion, the third wall portion, the fourth wall portion, and the fifth wall portion to the mounting seat, the structures of the first wall portion, the second wall portion, the third wall portion, the fourth wall portion, and the fifth wall portion can be made more stable.

In some embodiments, the first wall portion, the second wall portion, the third wall portion, the fourth wall portion, and the fifth wall portion jointly define an accommodating space. The mounting seat includes at least one mounting plate, where the mounting plate is accommodated in the accommodating space. By disposing the mounting plate in the accommodating space, the structural strength of the accommodating space is enhanced, such that when the anti-collision member contacts an external component, the anti-collision member can withstand a greater force while maintaining its structure.

In some embodiments, the mounting seat includes a plurality of mounting plates, and the plurality of mounting plates are arranged at intervals in the accommodating space along a third direction. The first direction, the second direction, and the third direction are non-coplanar and intersect one another. By providing a plurality of mounting plates, the structure of the anti-collision member is more stable and the strength is higher.

In some embodiments, the anti-collision member is formed by bending a plate to form the first wall portion, the second wall portion, the third wall portion, the fourth wall portion, and the fifth wall portion. By bending a plate to form the first wall portion, the second wall portion, the third wall portion, the fourth wall portion, and the fifth wall portion, processing and manufacturing of the anti-collision member are facilitated, the processing cost is reduced, and the connection strength at the bent portions of the anti-collision member is maintained.

In some embodiments, the anti-collision member includes an elastic block, and the first end surface is a surface of the elastic block facing away from the container body. By using the elastic block as the anti-collision member, when an external component contacts the anti-collision member, the anti-collision member can deform to reduce the risk of damage to the anti-collision member. Inclined surfaces are provided on two sides of the first end surface along the second direction, such that when the anti-collision member is moved along the second direction, each of the inclined surfaces on two sides of the first end surface may contact an external component to guide the energy storage container away from the external component.

In some embodiments, the container body is provided with a mounting seat, and the elastic block is detachably connected to the mounting seat. The elastic block is detachably connected to the container body through the mounting seat, facilitating replacement of the elastic block.

In some embodiments, the anti-collision member is disposed on at least one side of the container body along a first direction. The guide portion includes an arc surface, a centerline of the arc surface extends along a third direction, and the first direction intersects the third direction. By providing the arc surface, when an external component abuts against the arc surface in a non-tangential direction of the arc surface, the arc surface can guide the energy storage container away from the external component, providing a better guiding effect.

In some embodiments, the anti-collision member includes a column body. An axis of the column body extends along the third direction. The column body has an outer peripheral surface. The outer peripheral surface surrounds the axis. At least a part of the outer peripheral surface is the arc surface. By using a part or the entirety of the outer peripheral surface of the column body as the arc surface, the time required for adjusting the installation angle of the anti-collision member during installation of the column body is reduced, and the installation of the anti-collision member is more convenient.

In some embodiments, the container body is provided with a mounting seat, and the column body is rotatably disposed on the mounting seat about the axis. The column body is rotatably disposed on the mounting seat. When an external component contacts the column body, the column body may reduce the risk of damage due to friction between the external component and the column body by rotating, and the entire outer peripheral surface of the column body may serve as the arc surface, thereby increasing the usable area of the guide portion.

In some embodiments, the mounting seat includes two mounting plates. The two mounting plates are respectively disposed on two sides of the column body along the third direction, and the column body is rotatably connected to the two mounting plates through a connecting shaft. By disposing mounting plates on two sides of the column body along the third direction, the stability of the column body is improved, facilitating the rotation of the column body on the container body.

In some embodiments, the container body includes a cross beam. The container body has a first side and a second side that are opposite each other along a width direction of the container body. The first side and/or the second side is provided with a cross beam. The cross beam extends along a length direction of the container body. The cross beam is provided with an anti-collision member. The length direction of the container body, the width direction of the container body, and a height direction of the container body are perpendicular to one another. The first direction is parallel to the width direction of the container body. Providing a cross beam on the first side and/or the second side of the container body helps to enhance the structural strength of the container body. When the guide portion of the anti-collision member contacts an external component, the guide portion applies a lateral force to the cross beam, and then the force is transmitted by the cross beam to the container body, causing the container body to move along its width direction away from the external component, thereby reducing the risk that the anti-collision member interferes with the movement of the energy storage container.

In some embodiments, a cross beam is provided at a top and/or a bottom of the first side along the height direction of the container body; and/or a cross beam is provided at a top and/or a bottom of the second side along the height direction of the container body. When a cross beam is provided at the bottom of the first side or the bottom of the second side of the container body, an anti-collision member is provided on the cross beam. When the container body is moved downward toward an external component, the anti-collision member may first contact the external component, and the guide portion guides the container body away from the external component, thereby reducing the risk that the anti-collision member interferes with the movement of the energy storage container. When a cross beam is provided at the top of the first side or the top of the second side of the container body, an anti-collision member is provided on the cross beam. When an external component is moved downward toward the container body, the external component may first contact the anti-collision member, and the guide portion of the anti-collision member guides the external component away from the container body, thereby reducing the risk that the anti-collision member interferes with the movement of the energy storage container.

### BRIEF DESCRIPTION OF DRAWINGS

To describe the technical solutions in the embodiments of the present application more clearly, the following briefly describes the accompanying drawings required for describing the embodiments. Apparently, the accompanying drawings in the following description show merely some embodiments of the present application. For those of ordinary skill in the art, other drawings may be obtained based on these accompanying drawings without creative efforts.
FIG. 1 is a cross-sectional view of an energy storage container according to some embodiments of the present application;
FIG. 2 is a schematic structural diagram of an energy storage container provided by some embodiments of the present application;
FIG. 3 is a partial enlarged view of region A in FIG. 2;
FIG. 4 is a schematic structural diagram of an anti-collision member according to some embodiments of the present application;
FIG. 5 is an exploded view of an anti-collision member and a mounting seat according to some embodiments of the present application;
FIG. 6 is a side view of an anti-collision member according to some embodiments of the present application;
FIG. 7 is a front view of an anti-collision member according to some embodiments of the present application;
FIG. 8 is a schematic structural diagram of an anti-collision member according to further embodiments of the present application;
FIG. 9 is an exploded view of an anti-collision member and a mounting seat according to further embodiments of the present application;
FIG. 10 is a schematic structural diagram of an anti-collision member according to still further embodiments of the present application;
FIG. 11 is an exploded view of an anti-collision member and a mounting seat according to still further embodiments of the present application;
FIG. 12 is a side view of an anti-collision member and a mounting seat according to some embodiments of the present application;
FIG. 13 is a schematic structural diagram of an energy storage container according to further embodiments of the present application; and
FIG. 14 is a partial enlarged view of region B in FIG. 13;

In the accompanying drawings, the accompanying drawings are not drawn to actual scale.

Description of reference signs: 1. first wall portion; 2. second wall portion; 3. third wall portion; 4. fourth wall portion; 5. fifth wall portion; 6. elastic block; 6a. through hole; 7. connecting shaft; 71. pin; 72. split pin; 1a. guide portion; 1b. inclined surface; 1c. arc surface; 2a. first end surface; 10a. receiving space; 101. column body; 1011. outer peripheral surface; 101a. axis; 10. anti-collision member; 20. container body; 201. container door; 30. partition member; 30a. accommodating space; 40. battery; 50. mounting seat; 60. cross beam; 50a. screw hole; 50b. bolt; 501. mounting plate; 100. energy storage container; 100a. first side; 100b. second side; X. first direction; Y. second direction; and Z. third direction.

### DESCRIPTION OF EMBODIMENTS

Implementations of the present application will be further described in detail below in conjunction with the accompanying drawings and embodiments. The detailed description of the following embodiments and the accompanying drawings are used for illustrating the principle of the present application, but cannot be used for limiting the scope of the present application, that is, the present application is not limited to the described embodiments.

Unless otherwise defined, all technical and scientific terms used herein have the same meaning as commonly understood by those skilled in the technical field to which the present application belongs. The terms used herein are only for the purpose of describing specific embodiments and are not intended to limit the present application. The terms "include", "comprise", and "have" and any variations thereof in the specification and claims of the present application and the above accompanying drawings are intended to cover non-exclusive inclusion.

In the description of the embodiments of the present application, the technical terms "first", "second", and the like are only used to distinguish different objects, and cannot be understood as indicating or implying relative importance or implicitly indicating the number, specific order or primary-secondary relationship of the indicated technical features.

Reference to "embodiment" herein means that a particular feature, structure or characteristic described in conjunction with the embodiment may be included in at least one embodiment of the present application. The appearance of the phrase in various places in the specification does not necessarily refer to the same embodiment, nor is it an independent or alternative embodiment that is mutually exclusive with other embodiments. It is explicitly and implicitly understood by those skilled in the art that the embodiments described herein may be combined with other embodiments.

In the description of the embodiments of the present application, the term "a plurality of" means more than two (inclusive). Similarly, "a plurality of groups" means more than two (inclusive) groups, and "a plurality of pieces" means more than two (inclusive) pieces, unless otherwise clearly and specifically limited.

In the description of the embodiments of the present application, unless otherwise clearly specified and limited, the technical terms "mount", "connect", "join", "fasten" and other terms should be understood in a broad sense. For example, they may refer to a fixed connection, a detachable connection, or an integral connection, may refer to a mechanical connection or electrical connection, and may refer to a direct connection, an indirect connection via an intermediate medium, an internal communication between two components, or an interactive relationship between two components. Persons of ordinary skill in the art can understand specific meanings of these terms in the embodiments of the present application as appropriate to specific situations.

"A plurality of" appearing in the present application means more than two (inclusive). Similarly, "a plurality of groups" means more than two (inclusive) groups, and "a plurality of pieces" means more than two (inclusive) pieces.

In embodiments of the present application, an energy storage container is an energy storage apparatus with a relatively high level of integration.

In an example, the energy storage container may include a battery compartment, and a plurality of batteries, a master control component, a busbar component and other components may be arranged in the battery compartment.

In this context, the battery may also be called a battery box, which includes a container body and one or more battery cells packaged by the container body. In an example, the battery cells may include lithium secondary batteries, lithium-ion primary batteries, lithium-sulfur batteries, sodium-lithium-ion batteries, sodium-ion batteries, magnesium ion batteries, or the like, which is not limited in the embodiments of the present application. The battery cells may be cylindrical, straight, cuboid, or of other shapes, which is also not limited in the embodiments of the present application.

In an example, a plurality of batteries arranged within the battery compartment may be connected in series, in parallel, or in a series-parallel configuration. In some implementations, the plurality of batteries may be connected to a master control component through a busbar component, and electrical connections among the plurality of batteries may be implemented through the master control component.

In applications of the energy storage container, various design factors of the energy storage container need to be considered, such as the thermal resistance performance, accommodation capacity, load-bearing stability of the energy storage container. In addition, reliability of the energy storage container also needs to be considered.

To improve the reliability of the energy storage container, an anti-collision member may be provided to an outside of the energy storage container. When the energy storage container collides with an external component, the anti-collision member buffers the impact between the energy storage container and the external component, thereby reducing damage to the energy storage container caused by the collision with the external component.

In a conventional energy storage container, an anti-collision member is provided on the outside of the energy storage container, and the anti-collision member may buffer impacts between the energy storage container and the external component. Due to the arrangement of the anti-collision member, during transfer of the energy storage container, the anti-collision member is prone to interference with external components, thereby making it difficult to properly position the energy storage container and increasing the difficulty of transferring the energy storage container. For example, during a hoisting process of the energy storage container, the energy storage container needs to be placed on a side of an external component (another energy storage container) so as to arrange the energy storage containers in an aligned manner. When the energy storage container is placed from top to bottom, the anti-collision members located on two sides of the energy storage container are likely to abut against external components, causing the external components to interfere with the normal movement of the energy storage container.

In view of this, embodiments of the present application provide an energy storage container in which an anti-collision member is disposed on the energy storage container, and a guide portion is disposed on the anti-collision member. When the guide portion of the anti-collision member contacts an external component, the guide portion can guide the energy storage container away from the external component, thereby reducing the risk that the external component interferes with the normal movement of the energy storage container and improving reliability of the energy storage container.

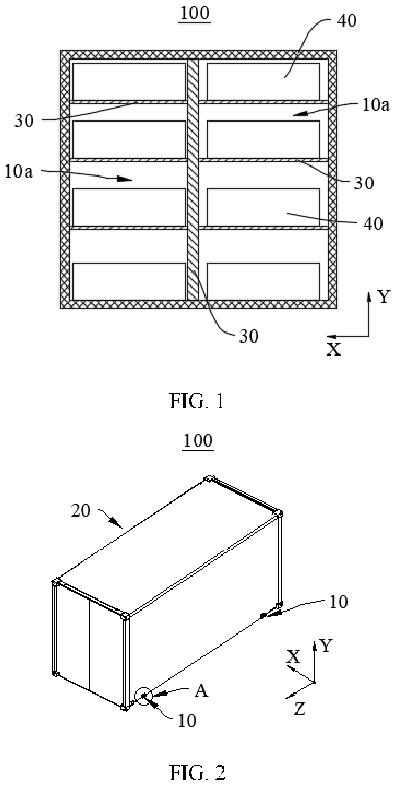

Referring to FIG. 1, FIG. 1 is a cross-sectional view of an energy storage container 100 according to some embodiments of the present application. The energy storage container 100 includes a container body 20, a partition member 30 and a battery 40. The container body 20 has an accommodating cavity. The partition member 30 is disposed in the container body 20 and divides the accommodating cavity into a plurality of receiving spaces 10a, and the batteries 40 are disposed in the receiving spaces 10a.

The partition member 30 may be an insulating board, an insulating mesh, or the like. The material of partition member 30 may be polytetrafluoroethylene, ceramic, rubber, or the like.

The battery 40 refers to a single physical module including one or more battery 40 cells to provide higher voltage and capacity. The battery 40 cells include, but are not limited to, lithium-ion batteries 40, sodium-ion batteries 40, sodium-lithium-ion batteries 40, lithium metal batteries 40, sodium metal batteries 40, lithium-sulfur batteries 40, magnesium-ion batteries 40, nickel-metal hydride batteries 40, nickel-cadmium batteries 40, and lead-acid batteries 40.

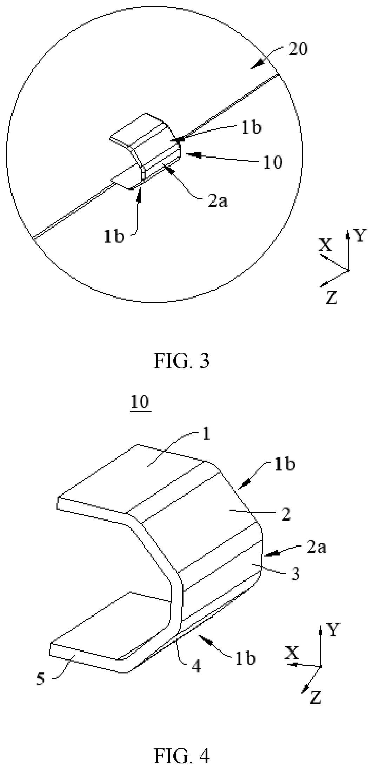

In some embodiments, referring to FIG. 2 and FIG. 3, FIG. 2 is a schematic structural diagram of an energy storage container 100 according to some embodiments of the present application, and FIG. 3 is a partial enlarged view of region A in FIG. 2. The energy storage container 100 includes a container body 20, a battery 40, and an anti-collision member 10. The container body 20 has an accommodating cavity, the battery 40 is accommodated within the accommodating cavity, and the anti-collision member 10 is disposed on the container body 20, where the anti-collision member 10 includes a guide portion 1a.

Referring to FIG. 2, the container body 20 may be provided with a container door 201 that facilitates loading and unloading of items. The container body 20 may be a hollow structure with one end open, or the container body 20 may be a hollow structure with openings on multiple surfaces. The opening of the container body 20 is provided with a container door 201. The energy storage container 100 may be a standard container body 20 complying with the national standard (GB1413-2008), or may be a non-standard container body 20 not complying with the national standard.

The anti-collision member 10 may be a block structure, a column structure, a strip structure, or the like. The anti-collision member 10 is disposed on the container body 20 and may be directly connected to the container body 20. For example, the anti-collision member 10 may be welded to the container body 20, or the anti-collision member 10 may be engaged with the container body 20. The anti-collision member 10 may be indirectly connected to the container body 20. For example, the anti-collision member 10 may be riveted to the container body 20 via a riveting member, and the riveting member may be a rivet. The anti-collision member 10 and the container body 20 may be bonded together by adhesive.

The number of anti-collision members 10 may be one or multiple. The anti-collision member 10 may be provided in any one of a length direction, a width direction, or a height direction of the container body 20, or the anti-collision member 10 may be provided in any two of the length direction, the width direction, or the height direction of the container body 20, or the anti-collision member 10 may be provided in the length direction, the width direction, and the height direction of the container body 20. When the anti-collision member 10 is provided in the length direction of the container body 20, the anti-collision member 10 may be provided on a side of the container body 20 along the length direction of the container body 20, or the anti-collision member 10 may be provided on two sides of the container body 20 along the length direction of the container body 20. When the anti-collision member 10 is provided in the width direction of the container body 20, the anti-collision member 10 may be provided on a side of the container body 20 along the width direction of the container body 20, or the anti-collision member 10 may be provided on two sides of the container body 20 along the width direction of the container body 20. When the anti-collision member 10 is provided in the height direction of the container body 20, the anti-collision member 10 may be provided on a side of the container body 20 along the height direction of the container body 20, or the anti-collision member 10 may be provided on two sides of the container body 20 along the height direction of the container body 20. It can be understood that when the anti-collision member 10 is provided on a side of the container body 20, one or a plurality of anti-collision members 10 may be provided on that side of the container body 20.

The anti-collision member 10 may be provided on an outer surface of the container body 20, or the anti-collision member 10 may be partially embedded in a wall of the container body 20, with another part of the anti-collision member 10 protruding from the container body 20.

The guide portion 1a is configured to guide movement of the container body 20. The guide portion 1a may be a surface on the anti-collision member 10. For example, at least a part of an outer surface of the anti-collision member 10 is the guide portion 1a. It can be understood that the guide portion 1a may be a plane or a curved surface. The guide portion 1a may alternatively be a component on the anti-collision member 10. For example, the guide portion 1a is a wedge-shaped block disposed on a side of the anti-collision member 10 away from the container body 20. When the wedge-shaped block contacts an external component (not shown), the wedge-shaped block can guide the container body 20 to move away from the external component. The guide portion 1a can also guide the external component to avoid the container body 20. For example, when the external component is moved to contact the guide portion 1a of the container body 20, the guide portion 1a can guide the external component away from the container body 20, thereby facilitating the external component to continue moving and reducing the difficulty of transferring the external component.

In the above energy storage container 100, by disposing the anti-collision member 10 on the container body 20, the anti-collision performance of the container body 20 is improved, and the risk of damage to the container body 20 due to impact during movement is reduced. The anti-collision member 10 is provided with a guide portion 1a. By providing the guide portion 1a, the guide portion 1a can guide movement of the energy storage container 100, thereby reducing the difficulty of transferring the energy storage container 100.

In some embodiments, the guide portion 1a is configured to, when the energy storage container 100 is moved such that the guide portion 1a contacts an external component, guide the energy storage container 100 away from the external component.

In an example, the anti-collision member 10 is disposed on at least one side of the container body 20 along the first direction X. When the energy storage container 100 is moved along the second direction Y and contacts the external component, the guide portion 1a guides the energy storage container 100 away from the external component along the first direction X. When the energy storage container 100 is moved along the first direction X and contacts the external component, the guide portion 1a guides the energy storage container 100 away from the external component along the second direction Y. The second direction Y intersects the first direction X.

The external component may be an obstacle during transfer of the energy storage container 100. For example, during loading and unloading of the energy storage container 100 on a cargo ship, the external component may be a hull of the cargo ship. The external component may alternatively be an energy storage container 100. For example, in stacking energy storage containers 100, when one energy storage container 100 is transferred to an upper part of another energy storage container 100 or to a side of other energy storage containers 100, the other energy storage containers 100 are external components.

The energy storage container 100 may be moved by crane hoisting, forklift handling, or the like

During the process in which the container body 20 is moved such that the anti-collision member 10 of the energy storage container 100 approaches the external component, the guide portion 1a of the anti-collision member 10 can contact the external component, buffering the contact between the container body 20 and the external component. As the container body 20 continues to move, the guide portion 1a can guide the container body 20 away from the external component, thereby reducing the difficulty of transferring the energy storage container 100.

In some embodiments, the anti-collision member 10 is disposed on at least one side of the container body 20 along the first direction X, and the guide portion 1a is configured to, when the energy storage container 100 is moved along the second direction Y such that the guide portion 1a contacts the external component, guide the energy storage container 100 away from the external component along the first direction X, where the first direction X intersects the second direction Y.

The anti-collision member 10 is disposed on at least one side of the container body 20 along the first direction X, that is, at least one side of the container body 20 is provided with the anti-collision member 10 along the first direction X. It can be understood that the anti-collision member 10 may be provided on only one side of the container body 20 along the first direction X, or on two sides of the container body 20 along the first direction X. The number of anti-collision members 10 may be one, and one anti-collision member 10 is disposed on a side of the container body 20 along the first direction X. A plurality of anti-collision members 10 may alternatively be provided, and the plurality of anti-collision members 10 may all be disposed on only one side of the container body 20 along the first direction X, or at least one anti-collision member 10 may be provided on two sides of the container body 20 along the first direction X.

The first direction X intersects the second direction Y. The first direction X and the second direction Y may form an acute angle, an obtuse angle, or a right angle.

Taking the case in which the first direction X and the second direction Y are perpendicular as an example, the first direction X is orthogonal to the second direction Y. Any two of the length direction, height direction, and width direction of the container body 20 may be parallel to the first direction X and the second direction Y, respectively.

In an embodiment in which the width direction of the container body 20 is parallel to the first direction X, and the length direction of the container body 20 is parallel to the second direction Y, when the container body 20 is moved along the length direction of the container body 20 such that the guide portion 1a contacts the external component, the guide portion 1a guides the container body 20 away from the external component along the width direction of the container body 20, so that the container body 20 can continue to move along the length direction of the container body 20, reducing the risk that the external component hinders the anti-collision member 10 and prevents the energy storage container 100 from continuing to move along the length direction, and reducing the difficulty of transferring the energy storage container 100.

In an embodiment in which the width direction of the container body 20 is parallel to the first direction X, and the height direction of the container body 20 is parallel to the second direction Y, when the container body 20 is moved along the height direction of the container body 20 such that the guide portion 1a contacts the external component, the guide portion 1a guides the container body 20 away from the external component along the width direction of the container body 20, so that the container body 20 can continue to move along the height direction of the container body 20, reducing the risk that the external component hinders the anti-collision member 10 and prevents the energy storage container 100 from continuing to move along the height direction, and reducing the difficulty of transferring the energy storage container 100.

In an embodiment in which the length direction of the container body 20 is parallel to the first direction X, and the width direction of the container body 20 is parallel to the second direction Y, when the container body 20 is moved along the width direction of the container body 20 such that the guide portion 1a contacts the external component, the guide portion 1a guides the container body 20 away from the external component along the length direction of the container body 20, so that the container body 20 can continue to move along the width direction of the container body 20, reducing the risk that the external component hinders the anti-collision member 10 and prevents the energy storage container 100 from continuing to move along the width direction, and reducing the difficulty of transferring the energy storage container 100.

In an embodiment in which the length direction of the container body 20 is parallel to the first direction X, and the height direction of the container body 20 is parallel to the second direction Y, when the container body 20 is moved along the height direction of the container body 20 such that the guide portion 1a contacts the external component, the guide portion 1a guides the container body 20 away from the external component along the length direction of the container body 20, so that the container body 20 can continue to move along the height direction of the container body 20, reducing the risk that the external component hinders the anti-collision member 10 and prevents the energy storage container 100 from continuing to move along the height direction, and reducing the difficulty of transferring the energy storage container 100.

In an embodiment in which the height direction of the container body 20 is parallel to the first direction X, and the length direction of the container body 20 is parallel to the second direction Y, when the container body 20 is moved along the length direction of the container body 20 such that the guide portion 1a contacts the external component, the guide portion 1a guides the container body 20 away from the external component along the height direction of the container body 20, so that the container body 20 can continue to move along the length direction of the container body 20, reducing the risk that the external component hinders the anti-collision member 10 and prevents the energy storage container 100 from continuing to move along the length direction, and reducing the difficulty of transferring the energy storage container 100.

In an embodiment in which the height direction of the container body 20 is parallel to the first direction X, and the length direction of the container body 20 is parallel to the second direction Y, when the container body 20 is moved along the width direction of the container body 20 such that the guide portion 1a contacts the external component, the guide portion 1a guides the container body 20 away from the external component along the height direction of the container body 20, so that the container body 20 can continue to move along the width direction of the container body 20, reducing the risk that the external component hinders the anti-collision member 10 and prevents the energy storage container 100 from continuing to move along the width direction, and reducing the difficulty of transferring the energy storage container 100.

By disposing the anti-collision member 10 on at least one side of the container body 20 along the first direction X, the anti-collision member 10 may contact an external component arranged along the first direction X, thereby reducing the risk of damage to the container body 20 caused by direct contact with the external component. When the energy storage container 100 is moved along the second direction Y, the guide portion 1a of the anti-collision member 10 may contact the external component, and the guide portion 1a can guide the container body 20 away from the external component along the first direction X, thereby facilitating the energy storage container 100 to continue to move along the second direction Y, reducing the risk that the external component hinders the anti-collision member 10 and prevents the energy storage container 100 from continuing to move along the second direction Y, and reducing the difficulty of transferring the energy storage container 100.

In some embodiments, the anti-collision member 10 is disposed on at least one side of the container body 20 along the first direction X. The guide portion 1a includes an inclined surface 1b intersecting the first direction X.

The inclined surface 1b and the first direction X may form an acute angle or an obtuse angle. The first direction X may be a height direction of the container body 20, a width direction of the container body 20, or a length direction of the container body 20.

One or a plurality of inclined surface 1b may be provided. In an example, the first direction X is the width direction of the container body 20, the second direction Y is the height direction of the container body 20, and an inclined surfaces 1b is provided on two sides of the anti-collision member 10 along the second direction Y.

By providing the inclined surface 1b intersecting the first direction X, when the external component contacts the inclined surface 1b, as the container body 20 is moved relative to the external component, the inclined surface 1b can guide the container body 20 away from the external component along the first direction X. The inclined surface 1b is easy to process and has low processing cost.

In some embodiments, continuing to refer to FIG. 3, the anti-collision member 10 has a first end surface 2a, the first end surface 2a is located at an end of the anti-collision member 10 away from the container body 20 along the first direction X, and the inclined surface 1b is connected to the first end surface 2a.

The first end surface 2a is an outer surface of the anti-collision member 10. The first end surface 2a and the first direction X may form an acute angle, an obtuse angle, or a right angle. In an example, the first end surface 2a is perpendicular to the first direction X, and the inclined surface 1b is connected to the first end surface 2a.

An inclined surface 1b may be connected to a side of the first end surface 2a, or two inclined surfaces 1b may be respectively connected to two sides of the first end surface 2a.

In an example, the first direction X is the width direction of the container body 20, and the second direction Y is the height direction of the container body 20. The inclined surface 1b is provided on the lower side of the anti-collision member 10, and the height of the inclined surface 1b gradually increases as the distance from the container body 20 increases. When the container body 20 is moved downward and causes the inclined surface 1b to abut against the external component, the pressure exerted by the external component on the inclined surface 1b may cause the anti-collision member 10 to push the container body 20 away from the external component.

In an example, the first direction X is the width direction of the container body 20, and the second direction Y is the height direction of the container body 20. The inclined surface 1b is provided on the upper side of the anti-collision member 10, and the height of the inclined surface 1b gradually decreases as the distance from the container body 20 increases. When the container body 20 is moved upward and causes the inclined surface 1b to abut against the external component, the pressure exerted by the external component on the inclined surface 1b may cause the anti-collision member 10 to push the container body 20 away from the external component.

In an example, the first direction X is the width direction of the container body 20, and the second direction Y is the length direction of the container body 20. The inclined surface 1b is provided on two sides of the anti-collision member 10 along the length direction of the container body 20. When the container body 20 is moved along the length direction of the container body 20, the external component on either side along the width direction of the container body 20 contacts the inclined surface 1b, and the pressure exerted by the external component on the inclined surface 1b can cause the anti-collision member 10 to push the container body 20 away from the external component.

By providing the inclined surface 1b close to the first end surface 2a facing away from the container body 20, when the inclined surface 1b contacts the external component, the inclined surface 1b guides the external component to move toward the first end surface 2a until the external component is separated from the anti-collision member 10 at the first end surface 2a. Accordingly, after contacting the inclined surface 1b, the external component is separated from the anti-collision member 10, resulting in a simpler structure and improved material utilization.

In some embodiments, the inclined surface 1b is connected to each of two sides of the first end surface 2a along a second direction Y.

In an example, the second direction Y is the height direction. An inclined surface 1b is provided on each of the upper side and the lower side of the first end surface 2a, where, as the distance of the anti-collision member 10 away from the container body 20 increases, the inclined surface 1b on the lower side of the first end surface 2a tilts upward, and the inclined surface 1b on the upper side of the first end surface 2a tilts downward.

By providing inclined surfaces 1b on two sides of the anti-collision member 10 along the second direction Y, a corresponding inclined surface 1b may contact the external component when the energy storage container 100 is moved back and forth in the second direction Y, thereby guiding the container body 20 away from the external component, and alleviating the problem that the installation position of the anti-collision member 10 on the container body 20 is limited because the anti-collision member 10 has only one inclined surface 1b.

In some embodiments, referring to FIG. 4, FIG. 4 is a schematic structural diagram of an anti-collision member 10 according to some embodiments of the present application. The anti-collision member 10 includes a first wall portion 1, a second wall portion 2, a third wall portion 3, a fourth wall portion 4, and a fifth wall portion 5 that are connected in sequence. The first wall portion 1 and the fifth wall portion 5 are oppositely disposed along the second direction Y. The third wall portion 3 is farther away from the container body 20 than the first wall portion 1 and the fifth wall portion 5 along the first direction X. A surface of the third wall portion 3 facing away from the container body 20 is the first end surface 2a, and a surface of the second wall portion 2 facing away from the fourth wall portion 4 and a surface of the fourth wall portion 4 facing away from the second wall portion 2 are both inclined surfaces 1b.

The first wall portion 1, the second wall portion 2, the third wall portion 3, the fourth wall portion 4, and the fifth wall portion 5 may be separately formed. For example, the first wall portion 1, the second wall portion 2, the third wall portion 3, the fourth wall portion 4, and the fifth wall portion 5 are welded in sequence. The first wall portion 1, the second wall portion 2, the third wall portion 3, the fourth wall portion 4, and the fifth wall portion 5 may be integrally formed. For example, the first wall portion 1, the second wall portion 2, the third wall portion 3, the fourth wall portion 4, and the fifth wall portion 5 may be injection molded.

The first wall portion 1 and the fifth wall portion 5 may each be directly connected to the container body 20, or may be indirectly connected to the container body 20. In an example, the first wall portion 1 is welded to the container body 20, and the fifth wall portion 5 is connected to the container body 20 via a spacer block, where the spacer block may be a metal block, a metal plate, or the like.

The first wall portion 1 and the fifth wall portion 5 are oppositely disposed along the second direction Y, which means that a projection of the first wall portion 1 at least partially overlap a projection of the fifth wall portion 5 along the second direction Y, and a gap is left between the first wall portion 1 and the fifth wall portion 5.

The third wall portion 3 is located between the first wall portion 1 and the fifth wall portion 5. Any position of the third wall portion 3 is farther away from the container body 20 than at least a part of the first wall portion 1 and at least a part of the fifth wall portion 5.

In an example, the first direction X is the width direction of the container body 20, and the second direction Y is the height direction of the container body 20. One end of the first wall portion 1 away from the second wall portion 2 is welded to the container body 20, and one end of the fifth wall portion 5 away from the fourth wall portion 4 is welded to the container body 20. The first wall portion 1 and the fifth wall portion 5 are arranged parallel to the first direction X, and the third wall portion 3 is arranged parallel to the second direction Y. Along the length direction of the container body 20, a projection length of the third wall portion 3 is smaller than a distance between the first wall portion 1 and the fifth wall portion 5.

By disposing the first wall portion 1 and the fifth wall portion 5 opposite each other and disposing the third wall portion 3 farther away from the container body 20 than the first wall portion 1 and the fifth wall portion 5, it is beneficial to maintain a sufficient distance on the side of the second wall portion 2 and the fourth wall portion 4 away from the third wall portion 3, such that a larger first end surface 2a can be provided, thereby reducing the risk of damaging the external component due to an excessively small first end surface 2a. In addition, inclined surfaces 1b intersecting the first direction X can be provided on the second wall portion 2 and the fourth wall portion 4. When the size of the first end surface 2a is determined, the inclination angle between the inclined surface 1b and the first direction X may be adjusted by adjusting the distance between the first wall portion 1 and the fifth wall portion 5, so as to facilitate the guide portion 1a to guide movement of the container body 20.

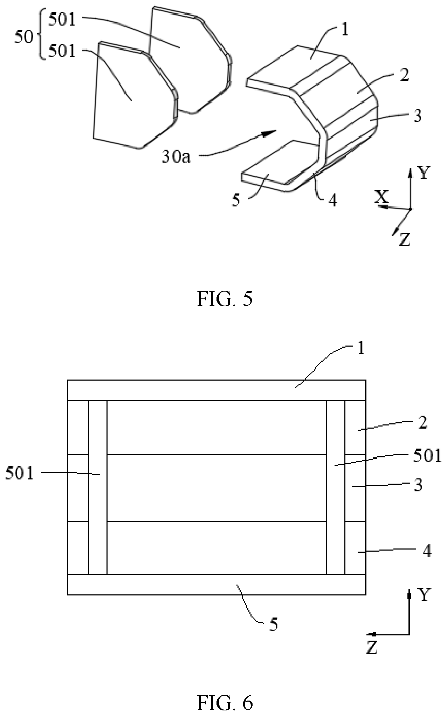

In some embodiments, referring to FIG. 5, FIG. 5 is an exploded view of an anti-collision member 10 and a mounting seat 50 according to some embodiments of the present application. The container body 20 is provided with a mounting seat 50, and the first wall portion 1, the second wall portion 2, the third wall portion 3, the fourth wall portion 4, and the fifth wall portion 5 are all connected to the mounting seat 50.

The mounting seat 50 may be provided on a side of the container body 20 along the first direction X, or may be provided on two sides of the container body 20 along the first direction X. The anti-collision member 10 is disposed on the mounting seat 50.

The first wall portion 1, the second wall portion 2, the third wall portion 3, the fourth wall portion 4, and the fifth wall portion 5 may all be directly connected to the mounting seat 50. For example, the first wall portion 1, the second wall portion 2, the third wall portion 3, the fourth wall portion 4, and the fifth wall portion 5 are all welded to the mounting seat 50. The first wall portion 1, the second wall portion 2, the third wall portion 3, the fourth wall portion 4, and the fifth wall portion 5 may all be indirectly connected to the mounting seat 50. For example, the first wall portion 1, the second wall portion 2, the third wall portion 3, the fourth wall portion 4, and the fifth wall portion 5 are all bonded to the mounting seat 50.

By disposing the anti-collision member 10 on the container body 20 through the mounting seat 50, and by connecting the first wall portion 1, the second wall portion 2, the third wall portion 3, the fourth wall portion 4, and the fifth wall portion 5 to the mounting seat 50, the structure of the first wall portion 1, the second wall portion 2, the third wall portion 3, the fourth wall portion 4, and the fifth wall portion 5 can be made more stable.

In some embodiments, the first wall portion 1, the second wall portion 2, the third wall portion 3, the fourth wall portion 4, and the fifth wall portion 5 jointly define an accommodating space 30a. The mounting seat 50 includes at least one mounting plate 501, where the mounting plate 501 is accommodated in the accommodating space 30a.

One or a plurality of mounting plates 501 may be provided. In an example, the number of mounting plates 501 is one. One mounting plate 501 is disposed on a side of the container body 20 along the first direction X. The mounting plate 501 may be directly connected to the first wall portion 1, the second wall portion 2, the third wall portion 3, the fourth wall portion 4, and the fifth wall portion 5. The mounting plate 501 may be indirectly connected to the first wall portion 1, the second wall portion 2, the third wall portion 3, the fourth wall portion 4, and the fifth wall portion 5. In an example, the mounting plate 501 is connected to the first wall portion 1, the second wall portion 2, the third wall portion 3, the fourth wall portion 4, and the fifth wall portion 5 through a cushion pad, where the cushion pad may be a wood block, rubber, or the like.

By disposing the mounting plate 501 in the accommodating space 30a, the structural strength of the accommodating space 30a is enhanced, such that when the anti-collision member 10 contacts an external component, the anti-collision member 10 can withstand a greater force while maintaining its structure.

In some embodiments, continuing to refer to FIG. 5, the mounting seat 50 includes a plurality of mounting plates 501. The plurality of mounting plates 501 are arranged at intervals in the accommodating space 30a along a third direction Z. The first direction X, the second direction Y, and the third direction Z are non-coplanar and intersect one another.

The first direction X, the second direction Y, and the third direction Z may form an acute angle, an obtuse angle, or a right angle with each other. In an example, the first direction X, the second direction Y, and the third direction Z are perpendicular to one another. The mounting plates 501 are arranged at intervals along the third direction Z. The interval arrangement means that two adjacent mounting plates 501 are not in contact and have a gap therebetween.

By providing a plurality of mounting plates 501, the structure of the anti-collision member 10 is more stable and the strength is higher.

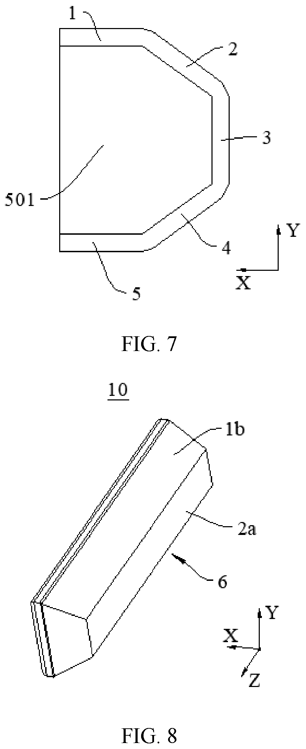

In some embodiments, referring to FIG. 6 and FIG. 7, FIG. 6 is a side view of an anti-collision member 10 according to some embodiments of the present application, and FIG. 7 is a front view of an anti-collision member 10 according to some embodiments of the present application. The anti-collision member 10 is formed by bending a plate to form the first wall portion 1, the second wall portion 2, the third wall portion 3, the fourth wall portion 4, and the fifth wall portion 5.

The material of the plate may be iron, steel, aluminum alloy, stainless steel, or the like.

By bending a plate to form the first wall portion 1, the second wall portion 2, the third wall portion 3, the fourth wall portion 4, and the fifth wall portion 5, processing and manufacturing of the anti-collision member 10 are facilitated, the processing cost is reduced, and the connection strength at the bent portions of the anti-collision member 10 is maintained.

In some embodiments, referring to FIG. 8, FIG. 8 is a schematic structural diagram of an anti-collision member 10 according to further embodiments of the present application. The anti-collision member 10 includes an elastic block 6, and the first end surface 2a is a surface of the elastic block 6 facing away from the container body 20.

The material of the elastic block 6 may be a rubber block, polyamide fiber, steel, or the like.

The elastic block 6 may be directly connected to the container body 20, and the elastic block 6 may be engaged with the container body 20. The elastic block 6 may be indirectly connected to the container body 20, and the elastic block 6 may be bonded to the container body 20.

The elastic block 6 may be a solid block or a hollow block. In an example, the elastic block 6 is provided with a hollow cavity enclosed therein. The hollow cavity facilitates the elastic block 6 to buffer impact forces applied by external components on the container body 20.

By using the elastic block 6 as the anti-collision member 10, when an external component contacts the anti-collision member 10, the anti-collision member 10 can deform to reduce the risk of damage to the anti-collision member 10. Inclined surfaces 1b are provided on two sides of the first end surface 2a along the second direction Y, such that when the anti-collision member 10 is moved along the second direction Y, each of the inclined surfaces 1b on two sides of the first end surface 2a may contact an external component to guide the energy storage container 100 away from the external component.

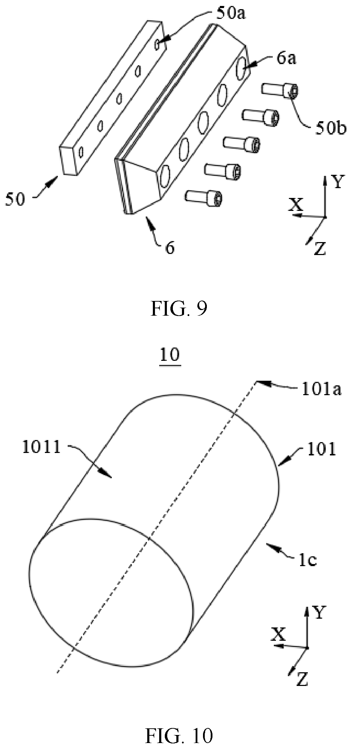

In some embodiments, referring to FIG. 9, FIG. 9 is an exploded view of an anti-collision member 10 and a mounting seat 50 according to further embodiments of the present application. The container body 20 is provided with a mounting seat 50, and the elastic block 6 is detachably connected to the mounting seat 50.

One or a plurality of mounting seats 50 may be provided. In an example, a plurality of mounting seats 50 are provided on two sides of the container body 20 along the first direction X, where the first direction X may be a width direction, a length direction, or a height direction of the container body 20.

The elastic block 6 and the mounting seat 50 may be detachably connected by bolts 50b; the elastic block 6 and the mounting seat 50 may be detachably engaged.

In an example, as shown in FIG. 9, the mounting seat 50 may be disposed on the container body 20 (not shown). The elastic block 6 is provided with a plurality of through holes 6a along the first direction X, and the mounting seat 50 is provided with a plurality of screw holes 50a corresponding to the through holes 6a. When the bolt 50b locks the elastic block 6 on the mounting seat 50, the bolts 50b pass through the through holes 6a and are screwed into the screw holes 50a.

The elastic block 6 is detachably connected to the container body 20 via the mounting seat 50, facilitating replacement of the elastic block 6.

In some embodiments, referring to FIG. 10, FIG. 10 is a schematic structural diagram of an anti-collision member 10 according to still further embodiments of the present application. The anti-collision member 10 is disposed on at least one side of the container body 20 along the first direction X. The guide portion 1a includes an arc surface 1c. A centerline of the arc surface 1c extends along a third direction Z, and the first direction X intersects the third direction Z.

Any two of the first direction X, the second direction Y, and the third direction Z may form an acute angle, an obtuse angle, or a right angle. In an example, the first direction X, the second direction Y, and the third direction Z are perpendicular to one another.

The centerline of the arc surface 1c is a straight line formed by connecting the intersection points of straight lines perpendicular to the tangential direction of any point on the arc surface 1c. In an example, as shown in FIG. 10, the anti-collision member 10 is in the shape of a cylinder 101 and has two circular end surfaces. A straight line connecting the centers of the two circular end surfaces is taken as a centerline of the anti-collision member 10. At least a part of the arc-shaped side wall of the anti-collision member 10 is the guide portion 1a.

By providing the arc surface 1c, when an external component abuts against the arc surface 1c in a non-tangential direction of the arc surface 1c, the arc surface 1c can guide the energy storage container 100 away from the external component, providing a better guiding effect.

In some embodiments, continuing to refer to FIG. 10, the anti-collision member 10 includes a column body 101. An axis 101a of the column body 101 extends along a third direction Z. The column body 101 has an outer peripheral surface 1011. The outer peripheral surface 1011 surrounds the axis 101a. At least a part of the outer peripheral surface 1011 is the arc surface 1c.

The anti-collision member 10 may be rotatably disposed on the container body 20, or the anti-collision member 10 may be fixedly disposed on the container body 20.

The entire outer peripheral surface 1011 may be the arc surface 1c, or a part of the outer peripheral surface 1011 may be the arc surface 1c. In an example, the anti-collision member 10 is welded to a side of the container body 20 along the first direction X. Along the first direction X, the outer peripheral surface 1011 on the side of the anti-collision member 10 away from the container body 20 is an arc surface 1c. The first direction X may be a width direction of the container body 20, the second direction Y may be a height direction of the container body 20, and the third direction Z may be a length direction of the container body 20. Along the first direction X from the container body 20 toward the anti-collision member 10, the distance between two sides of the arc surface 1c along the second direction Y gradually decreases.

In some embodiments in which the anti-collision member 10 is in the shape of a cylinder 101, the outer peripheral surface 1011 may be an arc-shaped side wall, and the axis 101a may be a centerline.

By using a part or the entirety of the outer peripheral surface 1011 of the column body 101 as the arc surface 1c, the time required for adjusting the installation angle of the anti-collision member 10 during installation of the column body 101 is reduced, and the installation of the anti-collision member 10 is more convenient.

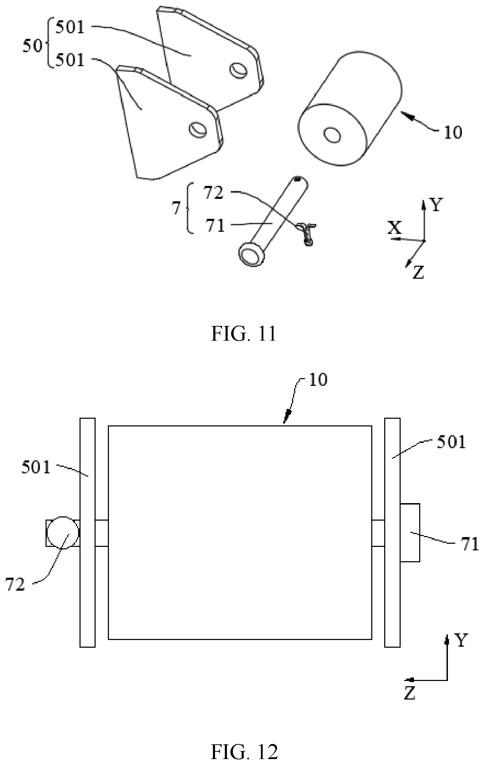

In some embodiments, referring to FIG. 11 and FIG. 12, FIG. 11 is an exploded view of an anti-collision member 10 and a mounting seat 50 according to still further embodiments of the present application, and FIG. 12 is a side view of an anti-collision member 10 and a mounting seat 50 according to some embodiments of the present application. The container body 20 is provided with a mounting seat 50, and the column body 101 is rotatably disposed on the mounting seat 50 about the axis 101a.

One or a plurality of mounting seats 50 may be provided. In an example, a plurality of mounting seats 50 are provided, and the plurality of mounting seats 50 are provided on two sides of the container body 20 along the first direction X, where the first direction X may be a width direction of the container body 20.

In an example, the third direction Z may be a length direction of the container body 20, and the axis 101a extends along the third direction Z.

The column body 101 may be directly rotatably disposed on the mounting seat 50. In an example, the mounting seat 50 is provided with two protrusions oppositely disposed along the third direction Z. Recessed grooves are provided at both ends of the column body 101 along the third direction Z, and the protrusions are received in the recessed grooves to realize the rotational connection between the column body 101 and the mounting seat 50. Alternatively, the column body 101 may be rotatably disposed on the mounting seat 50 via an external component. The external component may be a pin 71, a bearing, or the like. In an example, along the third direction Z, the mounting seat 50 is provided with two bearings oppositely disposed, and the column body 101 is rotatably connected to the mounting seat 50 via the bearings.

The column body 101 is rotatably disposed on the mounting seat 50. When an external component contacts the column body 101, the rotation of the column body 101 may reduce the risk of damage due to friction between the external component and the column body 101, and the entire outer peripheral surface 1011 of the column body 101 may serve as the arc surface 1c, thereby increasing the usable area of the guide portion 1a.

In some embodiments, continuing to refer to FIG. 11, the mounting seat 50 includes two mounting plates 501. The two mounting plates 501 are respectively disposed on two sides of the column body 101 along the third direction Z. The column body 101 is rotatably connected to the two mounting plates 501 via a connecting shaft 7.

The connecting shaft 7 may be fixedly connected to the column body 101, and the connecting shaft 7 may be rotatably connected to the mounting plate 501. Alternatively, the column body 101 may be rotatably disposed on the connecting shaft 7, and the connecting shaft 7 may be fixedly disposed on the mounting plate 501. Alternatively, the column body 101 may be rotatably disposed on the connecting shaft 7, and the connecting shaft 7 may be rotatably connected to the mounting plate 501. The fixed connection may be achieved by adhesive bonding, welding, or the like.

In an example, as shown in FIG. 11, the connecting shaft 7 includes a pin 71 and a split pin 72. The column body 101 is provided with a through hole along the third direction Z. The two mounting plates 501 are provided with two locking holes oppositely disposed. One end of the pin 71 serves as a head portion of the pin 71, and the other end is provided with a locking hole. When the column body 101 is rotatably disposed on the mounting plate 501, the pin 71 sequentially passes through one locking hole, the through hole, and the other locking hole. The split pin 72 is inserted into the locking hole for locking. The split pin 72 and the head portion of the pin 71 are located on two sides of the two mounting plates 501 along the third direction Z.

By disposing mounting plates 501 on two sides of the column body 101 along the third direction Z, the stability of the column body 101 is improved, facilitating the rotation of the column body 101 on the container body 20.

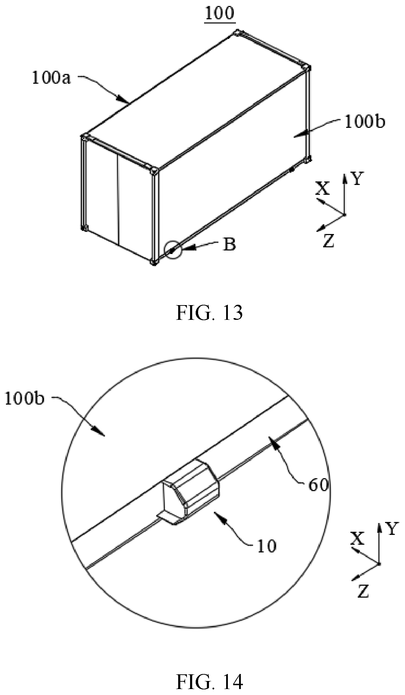

In some embodiments, continuing to refer to FIG. 13 and FIG. 14, FIG. 13 is a schematic structural diagram of an energy storage container 100 according to further embodiments of the present application, and FIG. 14 is a partial enlarged view of region B in FIG. 13. The container body 20 includes a cross beam 60. The container body 20 has a first side 100a and a second side 100b that are opposite each other along a width direction of the container body 20. The first side 100a and/or the second side 100b is provided with a cross beam 60. The cross beam 60 extends along the length direction of the container body 20. The cross beam 60 is provided with an anti-collision member 10. The length direction of the container body 20, the width direction of the container body 20, and the height direction of the container body 20 are perpendicular to one another. The first direction X is parallel to the width direction of the container body 20.

The container body 20 may be provided with a cross beam 60 on a side along the first direction X. For example, the first side 100a is provided with a cross beam 60, or the second side 100b is provided with a cross beam 60. Alternatively, two sides of the container body 20 along the first direction X may be provided with cross beams 60, that is, both the first side 100a and the second side 100b are provided with the cross beam 60.

The cross beam 60 may be disposed through the entire length of the container body 20, and a length of the cross beam 60 may be smaller than the length of the container body 20.

The cross beam 60 may be located at a top, a bottom, or a middle portion of the first side 100a. The cross beam 60 may alternatively be located at a top, a bottom, or a middle portion of the second side 100b.

In an example, as shown in FIG. 14, the cross beam 60 is located at the bottom of the first side 100a of the container body 20, and the anti-collision member 10 is disposed on the cross beam 60.

Providing the cross beam 60 on the first side 100a and/or the second side 100b of the container body 20 helps to enhance the structural strength of the container body 20. When the guide portion 1a of the anti-collision member 10 contacts an external component, the guide portion 1a applies a lateral force to the cross beam 60, and then the force is transmitted by the cross beam 60 to the container body 20, causing the container body 20 to move along its width direction away from the external component, thereby reducing the risk that the anti-collision member 10 interferes with the movement of the energy storage container 100.

In some embodiments, a cross beam 60 is provided at the top and/or the bottom of the first side 100a along the height direction of the container body 20; and/or, a cross beam 60 is provided at the top and/or bottom of the second side 100b along the height direction of the container body 20.

A cross beam 60 may be provided at the top of the first side 100a; a cross beam 60 may be provided at the bottom of the first side 100a; or cross beams 60 may be provided at both the top and the bottom of the first side 100a.

A cross beam 60 may be provided at the top of the second side 100b; a cross beam 60 may be provided at the bottom of the second side 100b; or cross beams 60 may be provided at both the top and the bottom of the second side 100b.

When the cross beam 60 is provided at the bottom of the first side 100a or the bottom of the second side 100b of the container body 20, an anti-collision member 10 is disposed on the cross beam 60. When the container body 20 is moved downward toward an external component, the anti-collision member 10 may first contact the external component, and the guide portion 1a guides the container body 20 away from the external component, thereby reducing the risk that the anti-collision member 10 interferes with the movement of the energy storage container 100. When a cross beam 60 is provided at the top of the first side 100a or the top of the second side 100b of the container body 20, the anti-collision member 10 is disposed on the cross beam 60. When an external component is moved downward toward the container body 20, the external component may first contact the anti-collision member 10, and the guide portion 1a of the anti-collision member 10 guides the external component away from the container body 20, thereby reducing the risk that the anti-collision member 10 interferes with the movement of the energy storage container 100.

Referring to FIG. 2 to FIG. 7, embodiments of the present application provide an energy storage container 100. The energy storage container 100 includes a container body 20 and an anti-collision member 10. Two sides of the container body 20 along its width direction are provided with cross beams 60, and the cross beams 60 are located at the bottom of the container body 20. Anti-collision members 10 may each be provided on the cross beams 60. The anti-collision member 10 includes a first wall portion 1, a second wall portion 2, a third wall portion 3, a fourth wall portion 4, and a fifth wall portion 5 formed by bending a plate. An upper surface of the second wall portion 2 is an inclined surface 1b, and a lower surface of the fourth wall portion 4 is also an inclined surface 1b. The first wall portion 1, the second wall portion 2, the third wall portion 3, the fourth wall portion 4, and the fifth wall portion 5 jointly define an accommodating space 30a. A plurality of mounting plates 501 are disposed in the accommodating space 30a, and the mounting plates 501 are connected to the container body 20, the first wall portion 1, the second wall portion 2, the third wall portion 3, the fourth wall portion 4, and the fifth wall portion 5.

During the process in which the energy storage container 100 is moved downward along the height direction and approaches the external component, the inclined surface 1b on the fourth wall portion 4 contacts the external component and guides the container body 20 away from the external component along the width direction of the container body 20, thereby reducing the risk that the anti-collision member 10 interferes with the movement of the energy storage container 100.

Referring to FIG. 8 and FIG. 9, embodiments of the present application provide an energy storage container 100. The energy storage container 100 includes a container body 20 and an anti-collision member 10. Two sides of the container body 20 along its width direction are provided with cross beams 60, and the cross beams 60 are located at the bottom of the container body 20. Anti-collision members 10 may each be provided on the cross beams 60. The anti-collision member 10 includes an elastic block 6. The elastic block 6 is connected to the cross beam 60 via a mounting seat 50. The elastic block 6 extends along the length direction of the container body 20, and inclined surfaces 1b are provided on both upper and lower sides of the elastic block 6.

During the process in which the energy storage container 100 is moved downward along the height direction and approaches the external component, the inclined surface 1b on the lower side of the elastic block 6 contacts the external component. The inclined surface 1b guides the container body 20 away from the external component along the width direction of the container body 20, thereby reducing the risk that the anti-collision member 10 interferes with the movement of the energy storage container 100.

Referring to FIG. 10 to FIG. 12, embodiments of the present application provide an energy storage container 100. The energy storage container 100 includes a container body 20 and an anti-collision member 10. Two sides of the container body 20 along its width direction are provided with cross beams 60, and the cross beams 60 are located at the bottom of the container body 20. Anti-collision members 10 may each be provided on the cross beams 60. The anti-collision member 10 includes a column body 101. The column body 101 is rotatably connected to a mounting seat 50 via a connecting shaft 7. The axis 101a of the column body 101 is parallel to the length direction of the container body 20.

During the process in which the energy storage container 100 is moved downward along the height direction and approaches the external component, an outer surface of the column body 101 contacts the external component. The outer surface of the column body 101 can guide the container body 20 away from the external component along the width direction of the container body 20, thereby reducing the risk that the anti-collision member 10 interferes with the movement of the energy storage container 100. In addition, the column body 101 is rotatable, thereby reducing friction between the column body 101 and the external component.

Although the present application has been described with reference to the preferred embodiments, various modifications can be made and components therein can be replaced with equivalents without departing from the scope of the present application. In particular, as long as there is no structural conflict, the technical features mentioned in the various embodiments can be combined in any manner. The present application is not limited to the specific embodiments disclosed herein, but includes all technical solutions falling within the scope of the claims.

## Claims

1. An energy storage container, comprising:
a container body having an accommodating cavity;
a battery accommodated within the accommodating cavity; and
an anti-collision member disposed on the container body;
wherein the anti-collision member comprises a guide portion.

2. The energy storage container according to claim 1, wherein the guide portion is configured to, when the energy storage container is moved such that the guide portion contacts an external component, guide the energy storage container away from the external component.

3. The energy storage container according to claim 1, wherein the anti-collision member is disposed on at least one side of the container body along a first direction,, and the guide portion is configured to, when the energy storage container is moved along a second direction such that the guide portion contacts the external component, guide the energy storage container away from the external component along the first direction, wherein the first direction intersects the second direction.

4. The energy storage container according to any one of claims 1 to 3, wherein along a first direction, the anti-collision member is disposed on at least one side of the container body; and
the guide portion comprises an inclined surface intersecting the first direction.

5. The energy storage container according to claim 4, wherein the anti-collision member has a first end surface, along the first direction, the first end surface is located at an end of the anti-collision member facing away from the container body, and the inclined surface is connected to the first end surface.

6. The energy storage container according to claim 5, wherein the inclined surface is connected to each of two sides of the first end surface along a second direction, and the second direction intersects the first direction.

7. The energy storage container according to claim 6, wherein the anti-collision member comprises a first wall portion, a second wall portion, a third wall portion, a fourth wall portion, and a fifth wall portion that are connected in sequence; the first wall portion and the fifth wall portion are oppositely disposed along the second direction; the third wall portion is farther away from the container body than the first wall portion and the fifth wall portion along the first direction; a surface of the third wall portion facing away from the container body is the first end surface; and a surface of the second wall portion facing away from the fourth wall portion and a surface of the fourth wall portion facing away from the second wall portion are both inclined surfaces.

8. The energy storage container according to claim 7, wherein the container body is provided with a mounting seat, and the first wall portion, the second wall portion, the third wall portion, the fourth wall portion, and the fifth wall portion are all connected to the mounting seat.

9. The energy storage container according to claim 8, wherein the first wall portion, the second wall portion, the third wall portion, the fourth wall portion, and the fifth wall portion jointly define an accommodating space; and
the mounting seat comprises at least one mounting plate, wherein the mounting plate is accommodated in the accommodating space.

10. The energy storage container according to claim 9, wherein the mounting seat comprises a plurality of the mounting plates, the plurality of the mounting plates are arranged at intervals in the accommodating space along a third direction, and the first direction, the second direction, and the third direction are non-coplanar and intersect one another.

11. The energy storage container according to any one of claims 7 to 10, wherein the anti-collision member is formed by bending a plate to form the first wall portion, the second wall portion, the third wall portion, the fourth wall portion, and the fifth wall portion.

12. The energy storage container according to claim 6, wherein the anti-collision member comprises an elastic block, and the first end surface is a surface of the elastic block facing away from the container body.

13. The energy storage container according to claim 12, wherein the container body is provided with a mounting seat, and the elastic block is detachably connected to the mounting seat.

14. The energy storage container according to any one of claims 1 to 3, wherein the anti-collision member is disposed on at least one side of the container body along a first direction; and
the guide portion comprises an arc surface, a centerline of the arc surface extends along a third direction, and the first direction intersects the third direction.

15. The energy storage container according to claim 14, wherein the anti-collision member comprises a column body, an axis of the column body extends along the third direction, the column body has an outer peripheral surface, the outer peripheral surface surrounds the axis, and at least a part of the outer peripheral surface is the arc surface.

16. The energy storage container according to claim 15, wherein the container body is provided with a mounting seat, and the column body is rotatably disposed on the mounting seat about the axis.

17. The energy storage container according to claim 16, wherein the mounting seat comprises two mounting plates, the two mounting plates are respectively disposed on two sides of the column body along the third direction, and the column body is rotatably connected to the two mounting plates through a connecting shaft.

18. The energy storage container according to any one of claims 1 to 17, wherein the container body has a first side and a second side opposite each other along a width direction of the container body, the first side and/or the second side is provided with a cross beam, the cross beam extends along a length direction of the container body, the cross beam is provided with the anti-collision member, and the length direction of the container body, the width direction of the container body, and a height direction of the container body are perpendicular to one another.

19. The energy storage container according to claim 18, wherein a top and/or a bottom of the first side is provided with the cross beam along the height direction of the container body; and/or, a top and/or a bottom of the second side is provided with the cross beam along the height direction of the container body.
